# EUROPÄISCHE PATENTSCHRIFT

(11) **EP 0 707 054 B1**
(45) Veröffentlichungstag und Bekanntmachung des Hinweises auf die Patenterteilung: **12.08.1998**
(21) Anmeldenummer: 95115512.6
(22) Anmeldetag: 02.10.1995
(51) Int. Cl.: C09J 123/08, C08L 23/08

(54) **Release- und Trenmittel-freie wickelbare einschichtige Schmelzklebefolie aus Olefin-Copolymerisaten**
Release and separation free, rollable monolayered hot melt foil based on olefin copolymers
Feuille de colle monocouche et enroulable, sans couche de décollage ni de séparation, à base de copolymères oléfiniques

(30) Priorität: 14.10.1994 DE 4436775
(43) Veröffentlichungstag der Anmeldung: 17.04.1996
(73) Patentinhaber: WOLFF WALSRODE AG, 29655 Walsrode (DE)
(72) Erfinder: Hargarter, Nicole, D-29640 Schneverdingen (DE); Schultze, Dirk, Dr., D-29683 Fallingsbostel (DE); Reiners, Ulrich, Dr., D-29643 Neuenkirchen (DE)
(74) Vertreter: Braun, Rolf, Dr.

(56) Entgegenhaltungen:
- EP-A- 0 424 724
- EP-A- 0 424 761
- US-A- 5 300 360

## Beschreibung

Die Erfindung betrifft einschichtige Schmelzklebefolien aus polaren Olefin-Copolymeren für das flächige Fixieren oder Verbinden anderer Substrate. Sie lassen sich unter Verzicht auf Trennmittel oder Trennbahnen auf- und abwickeln. Durch eine rauhe Oberfläche besitzen die Folien gute Maschinengängigkeiten. Die eingesetzten polaren Comonomere enthalten Sauerstoffatome.

Die erfindungsgemäßen thermoplastischen Hotmelt- oder Schmelzklebefolien eignen sich insbesonders zum Verkleben von Zellstoff basierenden Produkten sowie von Kunststoffen, besonders geeignet sind sie zum Verkleben von Polyolefinen. Sie sind vorteilhafterweise geeignet zum Verkleben von Bahnmaterialien wie Papieren, Pappen, Folien, Webwaren aber auch Vliesen. Sie können auch für Fixier- und Versiegelungsanwendungen eingesetzt werden. Durch ihren thermoplastischen Charakter eignen sie sich für wiederholte Aufschmelzvorgänge und bieten damit die Möglichkeit unter ihrer Verwendung aufgebaute Verbunde nachträglich wieder zu lösen. Die eingesetzten Substrate derart erzeugter Verbunde lassen sich damit auch einem werkstofflichen Recycling zuführen.

Für die Zwecke der vorliegenden Erfindung wird unter einer Schmelzklebefolie eine Folie auf Basis von thermoplastischen Kunststoffen verstanden, die im geschmolzenen Zustand infolge ihrer dann vorhandenen Oberflächenklebrigkeit und Fließfähigkeit sowie ihrer Dicke geeignet ist, andere Substate zu verbinden.

Es ist bekannt, daß sich Olefin-Copolymere mit Sauerstoff-Atome enthaltenden Comonomeren für den Einsatz als Schmelzklebstoffe oder als Rezepturkomponente für Schmelzklebstoffe eignen. Die Copolymere sind beispielsweise von Saechtling im: Kunststoff Taschenbuch, 24. Ausgabe, Hanser Verlag, München 1989, S. 243-246, oder von Domininghaus in: Die Kunststoffe und ihre Eigenschaften, 4. Auflage, VDI Verlag, Düsseldorf 1992, S. 82-123, beschrieben.

Die Sauerstoff-enthaltenden Olefin-Copolymere sind für ihren elastischen Charakter und verbesserte Hafteigenschaften bekannt. Zu den nach dem Stand der Technik realisierten Anwendungen zählen die als Haftvermittler- oder Siegelschichten in coextrudierten Folien, aber auch haftfeste Beschichtungen auf Metallen, Glas und Papier sind bekannt.

Zu den wichtigsten, in Olefin-Copolymeren enthaltenen, polaren Comonomerresten zählen die des Vinylacetats, in verseifter ebenso wie in unverseifter Form, der Acrylsäure sowie ihrer Ester und Salze und der Methacrylsäure sowie ihrer Ester und Salze.

Mit steigendem Comonomergehalt sinkt i.a. die Kristallisationsneigung des Copolymerisats, so daß u.a. Flexibilität, Transparenz, Spannungsrißbeständigkeit ebenso wie Klebrigkeit, Heißsiegelfähigkeit und Schweißbarkeit steigen bzw. verbessert werden. Da der Schmelzpunkt zudem absinkt, bieten sich die polaren Olefin-Copolymerisate damit idealerweise als Rohstoffe für Schmelzklebeanwendungen an, wobei hierfür Copolymerisate mit hohen Comonomergehalten von 18-40 Gew.-% eingesetzt werden. Den Mechanismus der verbesserten Haftung erläutert z.B. Elias in: Makromoleküle, Bd. 2, 5. Auflage, Hüthig & Wepf Verlag, Basel 1992, S. 134-135. In Abhängigkeit von den zu verklebenden Substraten und ihrer Oberfläche werden als Hotmelt-Rohstoffe im allgemeinen Materialien mit guten Fließeigenschaften, d.h. hohem Schmelzflußindex eingesetzt. Am Markt sind polare Olefin-Copolymere mit Schmelzflußindices von kleiner 0,1 g/10 min bis über 500 g/10 min erhältlich, jeweils gemessen nach DIN 5 37 35 bei 190°C und einer Prüfbelastung von 2,16 kg.

Die Klebkraft der Olefin-Copolymere steigert sich bekannterweise mit steigendem Comonomergehalt. Für Schmelzklebefolien werden allgemein Copolymere mit Comonomergehalten über 16 Gew.-% eingesetzt. Mit steigendem Comonomergehalt verringeren sich aber auch die Verarbeitungsmöglichkeiten. Während aus polaren Copolymeren mit Comonomergehalten unter 10 Gew.-% ohne größere Schwierigkeiten Folien erhalten werden können, ist es gleichermaßen bekannt, daß Materialien mit Comonomergehalten ab 16 Gew.-% auf dem Wickel verblocken. Mit steigendem Comonomergehalt erhöhen sich Transparenz und Glanz der erhaltenen Folie, die Oberfläche der hergestellten Halbzeuge wird glatter.

Die Zugabe der bekannten Antiblock- und Entformungsmittel verbietet sich bzw. hat unerwünschte Nebeneffekte für Schmelzklebefolien, da sich durch den Einsatz dieser Materialien die Klebkraft der Folie in dem Maße verringert, wie die Additive die Folienoberflächen belegen. Die Zugabe von anorganischen Abstandshaltern, die eine diskrete Verteilung in der Polymermatrix besitzen, resultiert in etwa in einem Klebkraftabfall proportional zum Additivgehalt. Die Zugabe von Entformungsmitteln, vielfach wachsartige Substanzen, die aufgrund ihrer Unverträglichkeit mit der Polymermatrix aus dieser hinausmigrieren und einen Film auf der Folienoberfläche bilden, bewirkt u.U. einen drastischen Verlust an Klebkraft.

Bedingt durch den weichen Charakter der Copolymere und ihre geringen Erweichungs- bzw. Schmelztemperaturen besitzen Folien aus diesen Materialien zudem den Nachteil, daß sie sehr glatte Oberflächen aufweisen, die dadurch den Folien einen blockigen Charakter geben. Hierdurch sind Maschinengängigkeiten beeinträchtigt, die Folien müssen permanent durch bewegliche Teile oder Trennmaterialbahnen geführt werden, um eine Verbindung mit stehenden Teilen und damit die Unterbrechung des Prozesses zu verhindern.

Eine weitere Möglichkeit, blockige Copolymere zu Filmen zu verarbeiten, besteht in der Integration in Mehrschichtaufbauten, bei denen sich die verschiedenen Schichten nur in der Wärme verbinden und in der Kälte nicht gegeneinander verblocken. So beschreiben die Offenlegungsschriften US 4 629 657, EP 0 424 761 oder EP 0 263 882 Polyolefinfolien, die mit heißklebefähigen Stoffen beschichtet sind. In diesem Fall übernimmt die weniger klebrige Schicht die Funktion der Trennschicht. Diese Folien weisen den Nachteil auf, daß sie nur eine heißklebefähige Seite besitzen, zudem ist die erzielbare Verbundhaftung gering und die Endprodukte besitzen eine nicht unerhebliche Rollneigung. In der EP 0 424 761 erwähnte Schichten aus Mischungen polarer Olefin-Copolymerisate wurden nicht zu einzelnen, selbsttragenden Schichten verarbeitet. Sie besaßen zudem eine Trenn- oder Trägerschicht aus Polypropylen, so daß sie nicht in einen Wickelkontakt mit sich selbst treten konnten.

Beim Einsatz als Fixiermedien ist es zudem von Nachteil, wenn die zu fixierenden Teile aufgrund der Materialblockigkeit nicht gegeneinander justiert werden können.

Allgemein verbreitet für die Verarbeitung dieser Materialien zu einschichtigen Bahnen ist der Einsatz von Trennmaterialien. Bekannte universell einsetzbare Trennmaterialbahnen bestehen beispielsweise aus silikonisierten Papieren, Geweben oder Folien.

Der Nachteil von Trennfilmen oder anderen Bahnmaterialien, wie sie beispielsweise in der DE 2 114 065 erwähnt sind, liegt darin, daß sie zusätzliche Lager- und Verarbeitungskapazitäten benötigen. Da sich die Trennmaterialien nie vollständig recyclieren lassen, stellen Trennmaterialien damit auch eine finanzielle und ökologische Belastung dar. Zusätzlich besteht durch den Verzicht auf Trennmittel nicht mehr das Risiko, daß sich ein Abklatsch migrierender Substanzen aus oder von dem Trennmaterial auf dem Schmelzklebefilm niederschlagen und damit die Klebewirkung beeinträchtigen kann.

Es stellte sich den Erfindern daher die Aufgabe, eine einschichtige Folie mit hoher Klebkraft für Thermokaschierung, -versiegelung und -fixierung bereitzustellen, die sich Trennmittel-frei wickeln und sich blockarm gleitend über die gängigen Heißkaschiermaschinen und Fixierpressen führen läßt.

Sie sollte sich zudem in ihrer Zusammensetzung optimal an die zu verklebenden Substrate anpassen lassen. Sie sollte sich wiederholt aufschmelzen lassen, so daß auch ein nachträgliches Justieren fixierter Substrate oder ein Lösen der Verbunde möglich ist.

Erfindungsgemäß gelang die Herstellung einer solchen, durch Wärmezufuhr und gegebenenfalls unter Druck heißkaschierbaren, wickelbaren thermoplastischen Schmelzklebefolie, durch das Abmischen unterschiedlicher polarer Olefin-Copolymerisate, die Sauerstoffatome enthalten und deren wesentlichen polaren Comonomere nicht identisch sind. Als olefinisches Comonomer wird Ethylen bevorzugt.

Zum Erhalt einer erfindungsgemäßen Folie müssen mindestens zwei verschiedene polare, Sauerstoff -enthaltende Olefin-Copolymere A und B gemischt und gemeinsam unter ausreichender Scherung aufgeschlossen werden. Der Gesamtanteil der polaren, Sauerstoff-enthaltenden Comonomerreste sollte zwischen 18 Gew.-% und 40 Gew.-%, bezogen auf die Gesamtmasse der eingesetzten Polymerharze, liegen. Das Olefin-Copolymer A sollte mit einem Gewichtsanteil von mindestens 60 % an der Gesamtmasse der Comonomerreste in stärkerem Maße vorhanden sein. Die erfindungsgemäße Folie ist im wesentlichen frei von den üblichen Antiblockmitteln und/oder Gleitmitteln.

Für den Fachmann überraschend war, daß sich eine Mischung aus mindestens zwei polaren Olefin-Copolymeren A und B mit hohem Anteil an polaren Comonomerresten zu einer Folie mit einer ausreichend hohen Oberflächenrauhigkeit verarbeiten läßt, so daß kein Verblocken auf dem Wickel stattfindet. Aufgrund der Oberflächenrauhigkeit liegen die Folienbahnen auf dem Wickel nicht plan übereinander, sondern berühren sich nur in den erhabenen Punkten der jeweiligen Folienlagen. Der Effekt wird durch die von der rauhen Folie in den Wickel eingeschleppte Luftmenge unterstützt, so daß kein Verblocken auftritt.

In einer bevorzugten Ausführungsform werden als Comonomere für die polaren Olefin-Copolymere A und B die Methacrylsäure und/oder ihre Salze und/oder Ester und/oder die Acrylsäure und/oder ihre Salze und/oder ihre Ester und/oder das Vinylacetat, in unverseifter und/oder verseifter Form, eingesetzt.

In einer bevorzugten Ausführungsform besteht die Folie im wesentlichen aus polaren, Sauerstoff-enthaltenden Olefin-Copolymeren, deren Comonomergehalt so gewählt ist, daß der Gesamtanteil an polaren, Sauerstoff-enthaltenden Comonomeren der die Folie bildenden Copolymere zwischen 22 Gew.-% und 28 Gew.-% beträgt.

In einer bevorzugten Ausführung beträgt der minimale Anteil des Comonomeren des in der Folie geringer enthaltenen Copolymeren B mindestens 1,5 Gew.-% und der des stärker vertretenen Comonomeren des Copolymeren B maximal 26,5 Gew.-%.

In einer bevorzugten Ausführung der Folie ist das Copolymer A ein Ethylenvinylacetat-Copolymer, dessen Mindestanteil an unverseiften Vinylacetatresten 18 Gew.-% beträgt, bezogen auf die Gesamtmasse des Copolymeren A. Als Copolymer B kommt die Gruppe umfassend
B1 Ethylenethylacrylat-Copolymer und/oder
B2 Ethylenacrylsäure-Copolymer
zum Einsatz.

In einer bevorzugten Ausführungsform enthält die erfindungsgemäße Folie
50 Gew.-% bis 95 Gew.-%, vorzugsweise 65 Gew.-% bis 95Gew.-% eines unverseiften Ethylenvinylacetat-Copolymeren als Copolymer A,
10 Gew.-% bis 50 Gew.-%, insbesondere 10 Gew.-% bis 35 Gew.-% des Ethylenethylacrylat-Copolymeren B1 und/oder
5 Gew.-% bis 35 Gew.-%, vorzugsweise 8 Gew.-% bis 20 Gew.-% des Ethylenacrylsäure-Copolymeren B2 und gegebenenfalls
5 Gew.-% bis 20 Gew.-% eines Polybutens B3, insbesondere Polybuten-1.

In einer besonders bevorzugten Ausführungsform besteht die Schmelzklebefolie, abgesehen von möglicherweise vorhandenen üblichen Additiven - wie beispielsweise Stabilisatoren - , aus Ethylenvinylacetat-Copolymer als Copolymeren A sowie den angegebenen Copolymeren B1, B2 und gegebenenfalls B3.

Wird unverseiftes Ethylenvinylacetat-Copolymer als Copolymer A eingesetzt, so enthält es in einer bevorzugten Ausführungsform 70 Gew.-% bis 90 Gew.-% insbesondere 75 Gew.-% bis 87 Gew.-% polymerisierte Ethyleneinheiten, wobei in einer besonders bevorzugten Ausführung der restliche Anteil im wesentlichen oder vollständig aus polymerisiertem Vinylacetat besteht. Das Ethylenethylacrylat-Copolymer B1 enthält in dieser bevorzugten Ausführungsform im wesentlichen polymerisierte Ethyleneinheiten, insbesondere wenigstens 88 Gew.-% polymerisierte Ethyleneinheiten, insbesondere 88 Gew.-% bis 92 Gew.-% polymerisierte Ethyleneinheiten, wobei die restlichen Anteile im wesentlichen oder vollständig aus polymerisiertem Ethylacrylat bestehen. Das Ethylenacrylsäure-Copolymer B2 besteht in dieser bevorzugten Ausführungsform im wesentlichen aus polymerisierten Ethyleneinheiten, insbesondere wenigstens 85 Gew.-% polymerisierten Ethyleneinheiten, besonders bevorzugt zu 85 Gew.-% bis 95 Gew.-% aus polymerisierten Ethyleneinheiten, wobei die restlichen Anteile im wesentlichen oder vollständig aus polymerisierter Acrylsäure bestehen.

Zur Herstellung von Folien werden bevorzugt olefinische Schmelzkleberohstoffe mit vergleichsweise niedrigen Schmelzflußindices eingesetzt, d.h. deutlich kleiner 100 g/10 min bei 190°C und 2,16 kg (DIN 5 37 35). Bei porösen Substraten bietet ein viskoses Fließen den Vorteil, daß der eingesetzte Film als solcher an der Oberfläche des Substrates weiterhin vorhanden bleibt und lediglich die Cavitäten auffüllt.

Eine Auswahl des Schmelzflußindexes ermöglicht eine Anpassung an die Oberflächenstruktur der Substrate sowie die Verarbeitungsmaschinen, für poröse, rauhe Oberflächen ebenso wie für geringe Verarbeitungsdrücke werden Copolymere mit höheren Schmelzflußindices eingesetzt, Copolymere mit niedrigen Schmelzflußindices hingegen für vergleichsweise feine bis glatte Substrate und hohe Verarbeitungsdrücke.

Für die erfindungsgemäße Folie eignen sich polare Copolymere mit einem Schmelzflußindex von 0,1 g/10 min bis 50 g/10 min bei 190 °C und 2,16 kg Prüfmasse (DIN 5 37 35), bevorzugt zwischen 0,1 g/10 min und 20 g/10 min. Üblicherweise besitzt das Copolymer A einen niedrigeren Schmelzflußindex als das Copolymer B.

Wird Ethylenvinylacetat-Copolymer als Copolymer A eingesetzt, so hat es in einer bevorzugten Ausführung einen Schmelzflußindex von 0,1 g/10 min bis 15 g/ 10 min bei 190 °C und 2,16 kg Prüfmasse (DIN 5 37 35), besonders bevorzugt von 0,3 g/10 min bis 8 g/10 min. In dieser bevorzugten Ausführung haben die Copolymere B einen Schmelzflußindex von 1 g/10 min bis 20 g/10 min bei 190 °C und 2,16 kg Prüfmasse (DIN 5 37 35), bevorzugt von 3 g/10 min bis 10 g/10 min.

Durch Variation der Copolymere ist eine Anpassung der Klebeeigenschaften an die gewünschten Substrate möglich. Wird ein höherer Anteil an Säurecopolymeren oder Ionomeren gewählt, lassen sich bessere Verklebungseigenschaften mit Metall oder Glas erzielen, mit einem hohen Anteil an Vinylacetatresten die Haftung zu Papier und Zellstoff-basierenden Produkten optimieren.

Entscheidend für die Trennmaterial-freie Wickelbarkeit ist die Ausbildung einer ausreichenden Oberflächenrauhigkeit, die nur dann erfolgt, wenn die eingesetzten polaren Copolymere Comonomere aufweisen, die in der Schmelze bereits Domänen ausbilden, so daß von einer Entmischungsstruktur gesprochen werden kann. Nicht naheliegend war, daß die Comonomere der polaren Olefin-Copolymere hinreichend unlöslich ineinander sind, daß sich die notwendige Entmischungsstruktur ausprägen kann. Der Aufschluß der Mischung aus den verschiedenen polaren Olefin-Copolymeren muß außerdem unter ausreichender Scherung erfolgen, damit größere Domänen in der Schmelze im Schergefälle zerteilt werden, da die sonst aus dem Folienwerkzeug ausgetragenen Entmischungsstrukturen derart große Dimensionen erreichen können, daß sie als Gelkörper die Ausformung zu Folie stören. Sie stellen die Ursache für unerwünscht hohe Dickentoleranzen und mögliche Abrisse der zu Folie ausgezogenen Schmelze dar.

Die Schmelze kann in den für die Folienherstellung bevorzugten Aufschlußwerkzeugen, die nach dem Schneckenprinzip arbeiten, nachgeschalteten Mischaggregaten oder auch im Folienwerkzeug einer Scherung unterworfen werden. Besonders bevorzugt ist die Scherung der Schmelze in dem nach dem Schnecken-Prinzip arbeitenden Aufschlußwerkzeug und/oder einem direkt nachgeschalteten dynamischen Mischaggregat.

Die erfindungsgemäßen Folien lassen sich nach dem Flachfolien- oder nach dem Blasfolienverfahren herstellen. In einer bevorzugten Ausführung werden die Folien nach dem Blasfolienverfahren hergestellt. Das Blasfolienverfahren ermöglicht durch unterschiedliche Aufblasverhältnisse eine flexible Anpassung der Liegebreite an die Erfordernisse des Marktes.

In einer bevorzugten Ausführung besitzen die erfindungsgemäßen Folien eine Dicke von 20 µm bis 200 µm und in einer besonders bevorzugten Ausführung zwischen 30 µm und 70 µm.

Bestandteile der erfindungsgemäßen Schmelzklebefolie können weiterhin die übiichen Additive und Hilfsmittel sein, dies sind beispielsweise Stabilisatoren, optische Aufheller, Farbstoffe und Keimbildner. Auch gängige Kohlenwasserstoff-Tackifier-Harze können als Additive in den erfindungsgemäßen Folien Verwendung finden.

Die gängigen Additive und Hilfsmittel sind von Gächter und Müller im: Taschenbuch der Kunststoff-Additive, 2. Ausgabe, Hanser Verlag, München 1983, beschrieben.

Die erfindungsgemäßen Folien lassen sich mit Hilfe der gängigen Oberflächenbehandlungsverfahren, bevorzugt sind Corona-, Flamm- und/oder Fluor-Behandlung, in ihren Oberflächeneigenschaften an zu verbindende Substrate anpassen. Verschiedene Verfahren zur Oberflächenmodifikation sind beispielsweise von Gerstenberg in: Coating 4/93, S. 119-122, beschrieben.

Gegenstand der Erfindung ist weiterhin ein Verfahren zur Herstellung von Verbunden aus beliebigen Substraten und einer erfindungsgemäßen Folie, dadurch gekennzeichnet, daß man die Folie mit mindestens einem Substrat unter Wärmeeinfluß und vorzugsweise nur geringem Druck zusammenbringt. In einer bevorzugten Ausführung wird die Folie zwischen zwei unterschiedliche Substrate gelegt und verbindet diese nach Zusammenführung und dem Einfluß von Wärme und Druck.

Bei den Substraten handelt es sich vorzugsweise um Bahnmaterialien oder Abschnitte davon. Solche Bahnmaterialien sind beispielsweise Webwaren, Vliese, Folien, Papiere, Pappen und Kartonagen. Sie bestehen aus Zellstoff oder Zellstoffenthaltenden Produkten, anderen pflanzlichen Produkten, Fasermaterialien, Kunststoffen oder auch Metallen.

Gegenstand der Erfindung sind ferner Folienab- oder -ausschnitte allgemein durch Stanzen oder Schneiden hergestellt und ihr Einsatz zum Fixieren und/oder Versiegeln von Materialien oder Gegenständen gegeneinander, dadurch gekennzeichnet, daß Ab- oder Ausschnitte der erfindungsgemäßen Folie zwischen zwei gleiche oder unterschiedliche Materialien oder Gegenstände gebracht werden und eine Verbindung in Form einer Versiegelung oder Fixierung unter Wärme und optional Druck stattfindet. Als dieserart zu verbindende Stoffe kommen bevorzugt Zellstoff oder Zellstoff-enthaltende Produkte, Hölzer, pflanzliche und tierische Fasermaterialien, Kunststoffe, Metalle und Gläser in Frage.

Die erfindungsgemäßen Verbunde und/oder Verbindungen sind thermoreversibel. Sie lassen sich somit nach dem Einsatz wieder zerlegen, so daß die verwendeten Materialien dem werkstofflichen Recycling zur Verfügung stehen.

### Beispiele

### Beispiel A

Eine Mischung aus 80 Gew.-% eines Vinylacetat-Copolymeren und 20 Gew.-% eines Ethylenmethylacrylat-Copolymeren wurden in einem Schneckenwerkzeug unter Scherung und Wärmeeintrag aufgeschlossen. Das Ethylenvinylacetat-Copolymer hatte einen Schmelzflußindex von 2 g/10 min, gemessen nach DIN 5 37 35 bei 190 °C unter einer Prüfmasse von 2,16 kg. Der Vinylacetat-Anteil des Copolymeren betrug 18 Gew.-%. Das Ethylenmethylacrylat-Copolymer hatte einen Schmelzflußindex von 4 g/10 min, gemessen nach DIN 5 37 35 bei 190 °C unter einer Prüfmasse von 2,16 kg. Der Methylacrylat-Anteil dieses Copolymers betrug 24 Gew.-%. Aus der Schmelze wurde mit Hilfe eines Blasfolienwerkzeuges eine Schlauchfolie geformt, flachgelegt und aufgewickelt. Muster für die Bestimmung der Vergleichseigenschaften konnten problemlos nach mehreren Tagen Wartezeit vom Wickel abgerollt werden. Die erhaltenen Folienmuster wiesen eine Dicke von 70 µm auf.

### Beispiel B

Eine Mischung aus 82 Gew.-% eines Vinylacetat-Copolymeren und 18 Gew.-% eines Ethylenacrylsäure-Copolymeren wurden in einem Schneckenwerkzeug unter Scherung und Wärmeeintrag aufgeschlossen. Das Ethylenvinylacetat-Copolymer hatte einen Schmelzflußindex von 2 g/10 min, gemessen nach DIN 5 37 35 bei 190 °C unter einer Prüfmasse von 2,16 kg. Der Vinylacetat-Anteil des Copolymeren betrug 25 Gew.-%. Das Ethylenacrylsäure-Copolymer hatte einen Schmelzflußindex von 8 g/10 min, gemessen nach DIN 5 37 35 bei 190 °C unter einer Prüfmasse von 2,16 kg. Der Acrylsäure-Anteil dieses Copolymeren betrug 12 Gew.-%. Aus der Schmelze wurde mit Hilfe eines Blasfolienwerkzeuges eine Schlauchfolie geformt, flachgelegt und aufgewickelt. Muster für die Bestimmung der Vergleichseigenschaften konnten problemlos nach mehreren Tagen Wartezeit von dem Wickel abgerollt werden. Die erhaltenen Folien waren 70 µm dick.

### Vergleichsbeispiel C

Ein Ethylenvinylacetat-Copolymer mit einem Vinylacetatanteil von 18 Gew.-% wurde mit dem gleichen, für die Beispiele A und B eingesetzten, Schneckenwerkzeug unter Scherung und Wärmeeintrag aufgeschlossen und zu einer Schlauchfolie ausgeformt. Das Ethylenvinylacetat-Copolymer hatte einen Schmelzflußindex von 2 g/10 min gemessen bei 190 °C und einer Prüfbelastung von 2,16 kg (DIN 5 37 35). Die flachgelegte Folie verblockte auf dem Wickel. Durch Einschießen von silikonisiertem Trennpapier konnten Folienmuster mit einer Dicke von ebenfalls 70 µm erhalten werden, an denen die Vergleichseigenschaften abgeprüft wurden.

Die in der nachfolgenden Tabelle wiedergegebenen Charakterisierungsdaten zeigen deutlich, daß die erfindungsgemäßen Folien einer Vergleichsfolie aus einem nur ein Comonomer enthaltenden Copolymer überlegen sind.

**Tabelle 1**

| Eigenschaften der im Rahmen der Beispiele und Vergleichsbeispiele hergestellten Folien | | | | | |
|---|---|---|---|---|---|
| Eigenschaft | Bestimmungsmethode | Einheit | Beispiel A | Beispiel B | Vergleichsbeispiel C |
| abwickelbar | ./. | ./. | ja | ja | nein |
| Haftreibungszahl im Kontakt Folie /Metall | DIN 5 33 75 | ./. | 0,63 | 0,74 | 0,90 |
| Gleitreibungszahl im Kontakt Folie /Metall | DIN 5 33 75 | ./. | 0,69 | 0,78 | 1,00 |
| gemittelte Rauhtiefe | DIN 4 76 81 | µm | 0,29 | 0,35 | 0,10 |
| Schmelzpunkt | ASTM D3418 | °C | 83 | 75 | 85 |
| Normalblockwert /50°C | DIN 5 33 66 | N/cm² | 0,10 | 1,44 | verblockt |

Die Oberflächenrauhigkeit der erfindungsgemäßen Beispielfolien ist gegenüber der Vergleichsbeispielfolie mehr als verdoppelt. Dies bedingt die Trennmittel-freie Wickelbarkeit, die sich für die Folie aus dem Vergleichsbeispiel nicht erzielen läßt, obwohl die Schmelztemperatur - und damit auch die Kristallisationstemperatur - zu niedrigeren Temperaturen verschoben wurden. Die niedrigeren Werte der Haft- und Gleitreibungszahl, bestimmt im Kontakt von Folie zu Metall, der Folien, die in den Beispielen 1 und 2 beschrieben sind, gegenüber der Vergleichsfolie aus nur einem polaren Olefin-Copolymer belegen die bessere Maschinengängigkeit der erfindungsgemäßen Folien durch leichteres Gleiten über Maschinenteile. Im Normalblocktest ließen sich bei 50 °C noch Werte für die erfindungsgemäßen Folien A und B ermitteln, während die Vergleichsfolie C bereits verblockt war. Die höheren Werte für Haft- und Gleitreibungszahl sowie den Normalblockwert von Beispiel B gegenüber Beispiel A sind durch den ingesamt höheren Comonomergehalt der für Beispiel B eingesetzten Rohstoffmischung gegenüber der für Beispiel A bedingt. Die für Vergleichsbeispiel C erzeugte Folie weist einen geringeren Gesamt-Comonomergehalt als die für die Beispiele A und B erzeugten Folien auf. Da in Vergleichsbeispiel C jedoch nur eine Comonomer-Komponente eingang findet, besitzt die in Vergleichsbeispiel C beschriebene Folie eine deutlich glattere Oberfläche. Sie verblockt dadurch bereits auf dem Wickel. Dieses Ergebnis wird auch durch den Normalblocktest verifiziert, der zeigt, daß bei 50 °C die Folien aus den Vergleichsbeispielen noch nicht verblocken, während die Folie aus Vergleichsbeispiel C bereits untrennbar verblockt.

## Patentansprüche

1. Trennschichtfreie, einschichtige, weiche und elastische thermoplastische Schmelzklebefolie, dadurch gekennzeichnet, daß sie sich ohne zusätzliche Verwendung eines Trennmaterials auf- und abwickeln läßt, im wesentlichen frei von Antiblock- und/oder Gleitmitteln ist und daß das Maximum ihres thermoanalytisch bestimmten Hauptschmelzpeaks unter 90 °C liegt und die im wesentlichen aus mindestens zwei Olefin-Copolymeren mit polaren Comonomeren A und B gebildet wird, wobei als olefinisches Monomer bevorzugt Ethylen eingesetzt wird und deren wesentliche Comonomere Sauerstoff-Atome enthalten und die wesentlichen Sauerstoff-enthaltenden Comonomeren der Olefin-Copolymere A und B chemisch nicht identisch sind, wobei der Gesamtanteil der Sauerstoff-enthaltenden Comonomere an der Gesamtmasse der die Folie bildenden Polymerharze zwischen 18 Gew.-% und 40 Gew.-% beträgt und der Anteil des Sauerstoff-enthaltenden Comonomeren des Copolymeren A mindestens 60 Gew.-% der Gesamtmasse der Sauerstoff-enthaltenden Comonomeren beträgt und die Copolymeren A und B gemeinsam unter ausreichender Scherung aufgeschlossen werden, so daß Copolymer B als fein verteilte zweite Phase in Copolymer A vorliegt.

2. Folie nach Anspruch 1, dadurch gekennzeichnet, daß als Comonomerreste der polaren Copolymere A und B Vinylacetat in verseifter und/oder unverseifter Form und/oder Acrylsäure und/oder ihre Ester und/oder Salze und/oder Methacrylsäure und/oder ihre Ester und/oder Salze Verwendung finden.

3. Folie nach einem der Ansprüche 1 und/oder 2, dadurch gekennzeichnet, daß der Gesamtanteil der Sauerstoff-enthaltenden Comonomere an der Gesamtmasse der die Folie bildenden Polymerharze mindestens 22 Gew.-% und höchstens 28 Gew.-% beträgt.

4. Folie nach wenigstens einem der vorangehenden Ansprüche, dadurch gekennzeichnet, daß der mimimale Anteil des Comonomeren des polaren Copolymeren B an der Gesamtmasse der die Folie bildenden Polymerharze 1,5 % beträgt und der maximale Anteil des polaren Comonomeren des Copolymeren A an der Gesamtmasse der die Folie bildenden Polymerharze 26,5 Gew.-% beträgt.

5. Folie nach wenigstens einem der vorangehenden Ansprüche, dadurch gekennzeichnet, daß die Folie im wesentlichen Copolymere A mit Ethylen- und Vinylacetatresten, wobei mindestens 18 Gew.-% Vinylacetat-Comonomerreste sind, bezogen auf die Gesamtmasse der eingesetzten Vinylacetat-Copolymere, und Copolymere B aus der Gruppe umfassend
B1 Ethylenethylacrylat-Copolymer und
B2 Ethylenacrylsäure-Copolymer enthält.

6. Folie nach Anspruch 5, dadurch gekennzeichnet, daß die Folie
| | |
|---|---|
| 50 bis 95 Gew.-% | Copolymer A und |
| 10 bis 50 Gew.-% | Copolymer B1 und/oder |
| 5 bis 35 Gew.-% | Copolymer B2 enthält. |

7. Folie nach wenigstens einem der vorangehenden Ansprüche, dadurch gekennzeichnet, daß das Copolymer A zu wenigstens 70 Gew.-% aus copolymerisierten Ethyleneinheiten besteht, das Copolymer B1 zu wenigstens 88 Gew.-% aus copolymerisierten Ethyleneinheiten besteht und Copolymer B2 zu wenigstens 85 Gew.-% aus copolymerisierten Ethyleneinheiten besteht.

8. Folien nach wenigstens einem der vorangehenden Ansprüche, dadurch gekennzeichnet, daß in der Folie zusätzlich ein Polybuten B3 enthalten ist.

9. Folie nach wenigstens einem der vorangehenden Ansprüche, dadurch gekennzeichnet, daß sie eine Dicke von mindestens 20 µm und höchstens 200 µm und in einer besonders bevorzugten Ausführung zwischen 30 µm und 70 µm besitzt.

10. Folie nach wenigstens einem der vorangehenden Ansprüche, dadurch gekennzeichnet, daß die Folie nach dem Blasfolienverfahren hergestellt wird.

11. Verwendung von Folie nach wenigstens einem der vorangehenden Ansprüche, dadurch gekennzeichnet, daß sie einseitig oder beidseitig einem der bekannten Verfahren zur Oberflächenbehandlung ausgesetzt wird, wobei Verfahren aus der Gruppe umfassend Corona-Behandlung, Flamm-Behandlung und Fluor-Behandlung bevorzugt werden.

12. Verwendung von Folie nach wenigstens einem der vorangehenden Ansprüche, dadurch gekennzeichnet, daß sie zur Herstellung von Verbunden und/oder Laminaten aus anderen Substraten eingesetzt wird.

13. Verwendung von Folie nach wenigstens einem der vorangehenden Ansprüche, dadurch gekennzeichnet, daß die Folie zum Fixieren anderer Substrate gegeneinander eingesetzt wird

14. Verfahren zur Herstellung von Verbunden aus beliebigen Substraten und einer erfindungsgemäßen Folie, dadurch gekennzeichnet, daß man die Substrate und eine Folie gemäß Anspruch 1 unter Wärme- und Druckeinwirkung zusammenführt, wobei die Folie zwischen den Substraten liegt.

15. Verfahren nach Anspruch 14, dadurch gekennzeichnet, daß als Substrate Papiere, Pappen, Kunststoffe, Metalle, Hölzer, Gläser, Stoffe, Gewebe, Vliese, pflanzliche Produkte oder Netze Anwendung finden.

## Claims

1. A single-layered, plastic and elastic thermoplastic hot-melt adhesive film which does not have a separating layer, characterised in that it can be wound on and off a reel without the use of a supplementary separating material, is substantially free of antiblocking agents and/or lubricants and that the maximum of its thermoanalytically determined main melting peak is below 90°C and which is substantially formed from at least two olefin copolymers with polar comonomers A and B, wherein ethylene is preferably used as an olefinic monomer, and whose essential comonomers contain oxygen atoms and the essential oxygen-containing comonomers in the olefin copolymers A and B are chemically not identical, wherein the total proportion of oxygen-containing comonomers in the total weight of polymer resin forming the film is between 18 wt.% and 40 wt.% and the proportion of oxygen-containing comonomers in copolymer A is at least 60 wt.% of the total weight of oxygen-containing comonomers and copolymers A and B are mutually degraded under a sufficient shearing force for copolymer B to be present as a finely distributed second phase in copolymer A.

2. A film according to Claim 1, characterised in that the comonomer units used in polar copolymers A and B are vinyl acetate in saponified and/or unsaponified form and/or acrylic acid and/or its esters and/or salts and/or methacrylic acid and/or its esters and/or salts.

3. A film according to one of Claims 1 and/or 2, characterised in that the total proportion of oxygen-containing comonomers in the total weight of polymer resin forming the film is at least 22 wt.% and at most 28 wt.%.

4. A film according to at least one of the preceding Claims, characterised in that the minimum proportion of polar comonomer in copolymer B in the total weight of polymer resin forming the film is 1.5 wt.% and in the maximum proportion of comonomer in the polar copolymer A in the total weight of the polymer resin forming the film is 26.5 wt.%

5. A film according to at least one of the preceding Claims, characterised in that the film contains substantially copolymers A with ethylene and vinyl acetate units, wherein at least 18 wt.% are vinyl acetate comonomer units, with reference to the total weight of vinyl acetate copolymer used, and copolymers B from the group consisting of
B1 an ethylene/ethyl acrylate copolymer and
B2 an ethylene/acrylic acid copolymer.

6. A film according to Claim 5, characterised in that the film contains
| | |
|---|---|
| 50 to 95 wt.% | of copolymer A and |
| 10 to 50 wt.% | of copolymer B1 and/or |
| 5 to 35 wt.% | of copolymer B2. |

7. A film according to at least one of the preceding Claims, characterised in that at least 70 wt.% of copolymer A consists of copolymerised ethylene units, at least 88 wt.% of copolymer B1 consists of copolymerised ethylene units and at least 85 wt.% of copolymer B2 consists of copolymerised ethylene units.

8. A film according to at least one of the previous Claims characterised in that a polybutene B3 is also contained in the film.

9. A film according to at least one of the preceding Claims, characterised in that it has a thickness of at least 20 µm and at most 200 µm and, in a specially preferred version, between 30 µm and 70 µm.

10. A film according to at least one of the preceding Claims, characterised in that the film is produced by blown film extrusion.

11. Use of a film according to at least one of the preceding Claims, characterised in that it is subjected on one side or on both sides to surface treatment by one of the known methods, wherein methods from the group comprising corona treatment, flame treatment and fluorine treatment are preferred.

12. Use of a film according to at least one of the preceding Claims, characterised in that it is used to produce composite materials or laminates from other substrates.

13. Use of the film according to at least one of the preceding Claims, characterised in that the film is used to fix other substrates to each other.

14. A process for preparing composite materials from any substrates and a film according to the invention, characterised in that the substrates and a film according to Claim 1 are brought into contact under the effect of heat and pressure, wherein the film is located between the substrates.

15. A process according to Claim 14, characterised in that the substrates used are papers, cards, plastics, metals, woods, glasses, cloths, woven fabrics, non-woven fabrics, plant products or gauzes.

## Revendications

1. Feuille thermofusible monocouche, thermoplastique, flexible et non rigide, exempte de couche de séparation, caractérisée en ce qu'on peut l'enrouler et la dérouler sans utiliser une matière de séparation supplémentaire, en ce qu'elle est essentiellement exempte d'agent s'opposant à l'adhérence de contact entre feuilles et/ou d'agent de glissement, et en ce que son point de fusion principal maximal déterminé par voie thermo-analytique est inférieur à 90°C et en ce qu'on l'obtient essentiellement à partir d'au moins deux copolymères d'oléfines comprenant des comonomères polaires A et B, dans laquelle on met en oeuvre, à titre de monomère oléfinique, de préférence l'éthylène, et ses comonomères essentiels contiennent une ou plusieurs atomes d'oxygène, les comonomères essentiels oxygénés des copolymères d'oléfines A et B n'étant pas identiques du point de vue chimique, dans laquelle la fraction totale des comonomères oxygénés représente une valeur entre 18% en poids et 40% en poids de la masse totale des résines polymères formant la feuille, la fraction du comonomère oxygéné du copolymère A représente au moins 60% en poids de la masse totale des comonomères oxygénés et les copolymères A et B sont soumis à une dissolution ou désagrégation conjointe en appliquant un cisaillement suffisant pour que le copolymère B soit présent sous forme d'une seconde phase finement divisée dans le copolymère A.

2. Feuille selon la revendication 1, caractérisée en ce que, trouvent une utilisation, à titre de résidus de comonomères des copolymères polaires A et B, l'acétate de vinyle sous forme saponifiée et/ou non saponifiée, et/ou l'acide acrylique et/ou ses esters et/ou ses sels, et/ou l'acide méthacrylique et/ou ses esters et/ou ses sels.

3. Feuille selon l'une des revendications 1 et/ou 2, caractérisée en ce que la fraction totale des comonomères oxygénés représente au moins 22% en poids et au maximum 28% en poids de la masse totale des résines polymères formant la feuille.

4. Feuille selon au moins une des revendications précédentes, caractérisée en ce que la fraction minimale du comonomère du copolymère polaire B représente 1,5% en poids de la masse totale des résines polymères formant la feuille et la fraction maximale du comonomère polaire du copolymère A représente 26,5% en poids de la masse totale des résines polymères formant la feuille.

5. Feuille selon au moins une des revendications précédentes, caractérisée en ce que la feuille contient essentiellement des copolymères A comprenant des résidus d'éthylène et d'acétate de vinyle, les résidus de comonomères d'acétate de vinyle représentant au moins 18% en poids rapportés à la masse totale des copolymères d'acétate de vinyle mis en oeuvre, et des copolymères B choisis parmi le groupe comprenant:
B1 un copolymère d'éthylène-acrylate d'éthyle et
B2 un copolymère d'éthylène-acide acrylique.

6. Feuille selon la revendication 5, caractérisée en ce que la feuille contient:
à concurrence de 50 à 95% en poids,
le copolymère A et
à concurrence de 10 à 50% en poids,
le copolymère B1 et/ou
à concurrence de 5 à 35% en poids,
le copolymère B2.

7. Feuille selon au moins une des revendications précédentes, caractérisée en ce que le copolymère A est constitué, au moins jusqu'à concurrence de 70% en poids, par des unités d'éthylène copolymérisées, le copolymère B1 est constitué, au moins jusqu'à concurrence de 88% en poids, par des unités d'éthylène copolymérisées, et le copolymère B2 est constitué, au moins jusqu'à concurrence de 85% en poids, par des unités d'éthylène copolymérisées.

8. Feuille selon au moins une des revendications précédentes, caractérisée en ce que la feuille contient en outre un polybutène B3.

9. Feuille selon au moins une des revendications précédentes, caractérisée en ce qu'elle possède une épaisseur minimale de 20 µm et une épaisseur maximale de 200 µm, et dans une forme de réalisation particulièrement préférée, une épaisseur entre 30 µm et 70 µm.

10. Feuille selon au moins une des revendications précédentes, caractérisée en ce qu'on prépare la feuille conformément au procédé de formation d'un tube par soufflage, que l'on aplatit en feuille.

11. Utilisation d'une feuille selon au moins une des revendications précédentes, caractérisée en ce qu'on expose une de ses faces ou ses deux faces à un des procédés connus pour le traitement superficiel, des procédés choisis parmi le groupe comprenant un traitement par effluves négatives, un traitement à la flamme et un traitement au fluor étant préférés.

12. Utilisation d'une feuille selon au moins une des revendications précédentes, caractérisée en ce qu'on la met en oeuvre pour la fabrication de composites et/ou de stratifiés comprenant d'autres substrats.

13. Utilisation d'une feuille selon au moins une des revendications précédentes, caractérisée en ce qu'on met en oeuvre la feuille pour fixer d'autres substrats les uns aux autres.

14. Procédé pour la fabrication de composites constitués par n'importe quels substrats et par une feuille selon l'invention, caractérisé en ce qu'on combine les substrats et une feuille selon la revendication 1 en appliquant de la chaleur et de la pression, la feuille étant disposée entre les substrats.

15. Procédé selon la revendication 14, caractérisé en ce que, trouvent une application à titre de substrats, des papiers, des cartons, des matières synthétiques, des métaux, des bois, des verres, des étoffes, des tissus, des non-tissés, des produits végétaux ou des treillis.
